# EUROPÄISCHE PATENTSCHRIFT

(11) **EP 0 893 311 B1**
(45) Veröffentlichungstag und Bekanntmachung des Hinweises auf die Patenterteilung: **23.03.2005**
(21) Anmeldenummer: 98113647.6
(22) Anmeldetag: 22.07.1998
(51) Int. Cl.: B60R 21/16

(54) **Hitzebeständiges Airbaggewebe**
Heat resistant air bag fabric
Tissu pour coussin gonflable résistant à la chaleur

(30) Priorität: 24.07.1997 DE 19731797
(43) Veröffentlichungstag der Anmeldung: 27.01.1999
(73) Patentinhaber: TRW Automotive Safety Systems GmbH, 63743 Aschaffenburg (DE)
(72) Erfinder: Kreuzer, Martin, 63839 Kleinwallstadt (DE); Neupert, Ralph, 63743 Aschaffenburg (DE)
(74) Vertreter: Degwert, Hartmut, Dipl.-Phys.

(56) Entgegenhaltungen:
- EP-A- 0 478 897
- EP-A- 0 496 894
- WO-A-94/21494
- WO-A-97/37874
- DE-A- 3 108 604
- DE-A- 4 423 823
- DE-A- 4 425 328

## Beschreibung

Die Erfindung betrifft einen Luftsack für Insassen-Schutzvorrichtungen in Fahrzeugen gemäß dem Oberbegriff von Anspruch 1. Ein solcher Luftsack ist aus dem Dokument WO-A-9 421 494 bekannt. Für die Herstellung derartiger Luftsäcke (Airbags) werden heute überwiegend Gewebe aus Polyamid- oder Polyesterfäden verwendet. die ggf. ganz oder teilweise mit Neopren oder Silikon beschichtet sind, um eine Beschädigung des Gewebes durch die beim Aufblasen in den Luftsack eintretenden, heißen Füllgase zu vermeiden. Manche Hersteller haben statt einer Beschichtung des Gewebes in den kritischen Bereichen zusätzliche Gewebeschichten vorgesehen, deren Zerstörung bewußt in Kauf genommen wird, um die außenseitig dahinterliegende, tragende Gewebeschicht zu schützen. In einigen Fällen hat man auch beide vorgenannten Maßnahmen angewandt, d.h. die zusätzlich vorgesehenen Opfer-Gewebeschichten mit einer Neopren- oder Silikonbeschichtung versehen.

Bei Gasgeneratoren die zum Aufblasen des Luftsacks ein Gemisch aus pyrotechnisch erzeugtem, heißen Gas und einem, aus einem Druckgasbehälter freigesetzten und sich dabei abkühlenden Gas bereitstellen ist ein Schutz des Luftsackgewebes gegen Temperatureinwirkungen normalerweise nicht erforderlich, weil die Gasgeneratoren selbstverständlich so ausgelegt werden, daß die heißen und kalten Gasanteile vor dem Eintritt in den Luftsack gut gemischt werden und dadurch eine unkritische Mischtemperatur annehmen. Wenn keine ausreichende Vermischung der heißen und kalten Gase gewährleistet werden kann, sind Luftsäcke im Einströmbereich allerdings auch bei derartigen Hybrit-Gasgeneratoren gefährdet.

Bei neueren Gasgeneratoren werden aus verschiedenen Gründen azidfreie Treibsätze verwendet, die eine höhere Reaktionstemperatur erfordern und daher Füllgase mit höherer Temperatur erzeugen.

In diesen Fällen sind Maßnahmen zum Schutz des Luftsackgewebes gegen hohe Temperaturen von zunehmender Bedeutung, will man nicht auf die Vorteile azidfreier Treibsätze verzichten.

Da die bekanntgewordenen, einschlägigen Schutzmaßnahmen alle verhältnismäßig aufwendig und kompliziert sind, besteht die Aufgabe, eine einfachere, kostengünstigere aber mindestens genauso sichere Methode zum Schutze des Luftsackgewebes gegen schädliche Einflüsse der heißen Füllgase anzugeben.

Zur Lösung dieser Aufgabe wird erfindungsgemäß vorgeschlagen, daß durch oberflächliche Karbonisierung des karbonisierbaren Gewebes bzw. Gewirkes eine thermische Schutzschicht für das restliche Gewebe bzw. Gewirke des Luftsacks gebildet wird.

Dem liegt die Erwägung zugrunde, daß durch oberflächliche Karbonisierung eines Fadens aus z.B. Polyamid oder Polyester eine Art Selbstschutz gegen hohe Temperaturen aufgebaut werden kann, weil die karbonisierte Schicht eine wesentlich geringere Wärmeleitfähigkeit aufweist, als das nicht karbonisierte Material, und weil somit der chemisch umgewandelte Teil eine thermische Schutzschicht für den Rest des Gewebes bildet.

Zur Messung des Karbonisierungseffektes wird ein Versuchsaufbau benutzt, bei dem eine definierte Oberfläche derart beflammt wird, daß die chemische Umwandlung erfolgen kann. Anschließend wird mit einer erhitzten Kugel von bestimmter Masse und bestimmtem Durchmesser geprüft, wie sich die Zeit bis zum Durchschmelzen gegenüber dem nicht erfindungsgemäß behandelten Luftsackmaterial verändert. Der Zeitunterschied bis zum Durchschmelzen ist ein Maß für die Verbesserung der Temperaturbeständigkeit des karbonisierten Gewebes.

Aus der WO-A-94 21 494 ist ein Luftsack aus einem Gewebe bekannt, das aus einem wärmestabilen thermoplastischen Filamentgarn besteht, welches mit einem hitzebeständigen Mantel umzwirnt, umsponnen, beschichtet oder bedampft ist. Dadurch soll eine Beschädigung des Gewebes beim Aufblasen des Luftsacks durch die heißen Gase vermieden werden.

In der DE-A-44 25 328 ist ein Luftsack gezeigt, in dessen Fußbereich eine Schutzlage mit einer hitzebeständigen Beschichtung vorgesehen ist.

In der DE-A-44 23 823 ist ein Luftsack gezeigt, der im Bereich des Gaseinlasses ein mehrlagiges beschichtetes Tuch aufweist, das als wärmebeständiges Bauteil dient.

Die oberflächliche Karbonisierung wird erleichtert, wenn das Gewebe bzw. Gewirke aus Fäden mit einem festen, gesponnenen Kern und daraus flauschig vorstehenden Monofilamenten besteht, die dem Temperaturangriff eine sehr große Oberfläche bieten und daher rasch in den karbonisierten, den Restfaden schützenden Zustand übergehen. Da die Herstellung derartiger Fäden nicht nennenswert teurer ist als die Herstellung der bisher verwendeten glatten Fäden, kann auf diese Weise der angestrebte Temperaturschutz ohne große zusätzliche Kosten erreicht werden. Außerdem ist es bei Verwendung derartiger Fäden nicht erforderlich, genau zu ermitteln, wo die besonders gefährdeten Bereiche liegen, weil der Luftsack insgesamt den potentiellen Temperaturschutz aufweist und weil er sich überall dort ausbildet, wo schädlich hohe Temperaturen auftreten.

Selbstverständlich ist es alternativ auch möglich, den Luftsack im kritischen Einströmbereich mit einem karbonisierbaren Gewebe zu beschichten, für diesen Fall müssen jedoch vorher die besonders gefährdeten Bereiche ermittelt werden.

Der Karbonisierungseffekt kann im Material für den Luftsack oder für die Beschichtung auch dadurch erreicht werden, daß im Gewebe oder Gewirke ein Anteil karbonisierbarer Fäden enthalten ist. Als Beschichtung kann darüber hinaus auch ein karbonisierbares Non-Woven verwendet werden, weil dabei keine nennenswerten Anforderungen an die Reißfestigkeit gestellt werden.

Schließlich ist noch vorgesehen, daß durch die Verwendung karbonisierbaren Materials die Beständigkeit des Luftsacks gegen Durchbrennen um mindestens 20% verbessert wird.

## Patentansprüche

1. Luftsack für Insassen-Schutzvorrichtungen in Fahrzeugen, der mittels pyrotechnisch erzeugter und ggf. aus einem Druckgasbehälter freigesetzter Gase rasch aufblasbar ist, wobei der Luftsack ganz oder teilweise aus einem unter Einwirkung heißer Gase oberflächlich karbonisierbaren Gewebe oder Gewirke besteht, **dadurch gekennzeichnet, daß** durch oberflächliche Karbonisierung des karbonisierbaren Gewebes bzw. Gewirkes eine thermische Schutzschicht für das restliche Gewebe bzw. Gewirke des Luftsacks gebildet wird.

2. Luftsack nach Anspruch 1, **dadurch gekennzeichnet, daß** der Luftsack im Einströmbereich heißer Gase mit einem Gewebe oder Gewirke beschichtet ist, das oberflächlich karbonisierbar ist.

3. Luftsack nach Anspruch 1 oder 2, **dadurch gekennzeichnet, daß** das Gewebe oder Gewirke insgesamt aus Fäden mit einer festen, gesponnenen Seele und daraus flauschig vorstehenden Monofilamenten besteht, die den karbonisierbaren Teil bilden.

4. Luftsack nach Anspruch 1 oder 2, **dadurch gekennzeichnet, daß** im Gewebe oder Gewirke ein Anteil karbonisierbarer Fäden vorhanden ist.

5. Luftsack nach Anspruch 2, **dadurch gekennzeichnet, daß** die Beschichtung aus einem karbonisierbaren Non-Woven besteht.

## Claims

1. An airbag for occupant protection devices in vehicles which is rapidly inflatable by means of pyrotechnically generated gases and optionally by means of gases released from a compressed gas container, the airbag consisting in whole or in part of a woven or knitted fabric that is superficially carbonizable when exposed to hot gases, **characterized in that** superficial carbonization of the carbonizable woven or knitted fabric causes a thermal protective layer to be formed for the remaining woven or knitted fabric of the airbag.

2. The airbag according to claim 1, **characterized in that** in the region where hot gases flow in, the airbag is coated with a woven or knitted fabric that is superficially carbonizable.

3. The airbag according to claim 1 or 2, **characterized in that** the woven or knitted fabric is made up entirely of threads having a solid, spun core and of monofilaments fluffily protruding therefrom which form the carbonizable part.

4. The airbag according to claim 1 or 2, **characterized in that** a portion of carbonizable threads is present in the woven or knitted fabric.

5. The airbag according to claim 2, **characterized in that** the coating consists of a carbonizable non-woven.

## Revendications

1. Coussin gonflable pour dispositifs de sécurité d'occupants dans des véhicules, qui peut être gonflé rapidement au moyen de gaz engendrés par méthode pyrotechnique et dégagés depuis un réservoir de gaz sous pression, le coussin gonflable étant constitué entièrement ou partiellement par un tissu tissé ou à mailles carbonisable en surface sous l'effet de gaz chauds, **caractérisé en ce que** par la carbonisation en surface du tissu tissé ou à mailles carbonisable, est formée une couche de protection thermique pour le reste du tissu tissé ou à mailles du coussin gonflable.

2. Coussin gonflable selon la revendication 1, **caractérisé en ce que** dans la région d'afflux de gaz chauds, le coussin gonflable est revêtu d'un tissu tissé ou à mailles qui est carbonisable en surface.

3. Coussin gonflable selon l'une des revendications 1 ou 2, **caractérisé en ce que** le tissu tissé ou à mailles est constitué dans l'ensemble par des fils à âme filée solide et par des monofilaments faisant saillie hors de celle-ci à la manière de peluches et qui forment la partie carbonisable.

4. Coussin gonflable selon la revendication 1 ou 2, **caractérisé en ce qu'**une part de fils carbonisables est comprise dans le tissu tissé ou à mailles.

5. Coussin gonflable selon la revendication 2, **caractérisé en ce que** le revêtement est en un non-tissé carbonisable.
